**Europäisches Patentamt**

**European Patent Office**

**Office européen des brevets**

(19)

(11) Veröffentlichungsnummer: **0 060 988**

**A1**

(12)

# EUROPÄISCHE PATENTANMELDUNG

(21) Anmeldenummer: **82100944.6**

(22) Anmeldetag: **10.02.82**

(51) Int. Cl.³: **B 62 J 7/04**
**B 62 J 5/20**

(30) Priorität: **20.03.81 DE 8108128 U**

(43) Veröffentlichungstag der Anmeldung:
**29.09.82 Patentblatt 82/39**

(84) Benannte Vertragsstaaten:
**AT BE CH FR IT LI LU NL SE**

(71) Anmelder: **ESGE-Marby GmbH + Co. KG.**
**Braker Strasse 1**
**D-4800 Bielefeld 16(DE)**

(72) Erfinder: **Niemann, Heinz**
**Engerstrasse 136**
**D-4900 Herford(DE)**

(74) Vertreter: **Rüger, Rudolf, Dr.-Ing.**
**Webergasse 3 Postfach 348**
**D-7300 Esslingen/Neckar(DE)**

(54) Gepäckträger für Zweiradfahrzeuge.

(57) Die Längsstreben (2,3) des die Gepäckauflagefläche enthaltenden Rahmens (1) sind einenends zu zwei nach unten gebogenen Schenkeln (5,6) verlängert und tragen endseitig Einrichtungen (7, 8) zur Befestigung an dem Zweiradfahrzeugrahmen wobei an dem hinteren Ende des Rahmens (1) ein plattenartiger Halter für einen von außen anbringbaren Rückstrahler (13) angeordnet ist.

Um eine einfache, formschöne und zweckdienliche Befestigungsmöglichkeit für den Rückstrahler ohne Änderungen an dem Gepäckträger selbst zu schaffen, ist die Anordnung derart getroffen, daß der Halter (2) im Bereiche der Biegung an der Übergangsstelle zwischen den Längsstreben (2, 3) und den Schenkeln (5, 6) auf der Rahmeninnenseite liegende, flache Halterungsteile (14) aufweist, von denen wenigstens ein mit der zugeordneten Längsstrebe (2, 3) und/oder dem zugeordneten Schenkel (5, 6) lösbar verrastetes, elastiches Klemmbackenpaar (15) trägt und die beide jeweils mit einer quer zu den Längsstreben (2, 3) zur Rahmeninnenseite hin verlaufenden Befestigungsplatte (16) verbunden sind, welche durch den daran angebrachten plattenartigen Rückstrahler (13) versteift ist.

FIG.1

EP 0 060 988 A1

ESGE-MARBY GmbH + Co., Braker Straße 1,
4800 Bielefeld 16

Gepäckträger für Zweiradfahrzeuge

Die Erfindung betrifft einen Gepäckträger für Zweiradfahrzeuge mit einem die Gepäckauflagefläche enthaltenden,
aus Längs- und Querstreben bestehenden Rahmen, dessen
Längsstreben einenends zu zwei nach unten gebogenen
Schenkeln verlängert sind, welche endseitig Einrichtungen
zur Befestigung an dem Zweiradfahrzeugrahmen tragen, wobei an dem hinteren Ende des Rahmens ein plattenartiger
Halter für einen von außen anbringbaren Rückstrahler
angeordnet ist.

Bei den bekannten Gepäckträgern für Zweiradfahrzeuge,
die einen an dem Zweiradfahrzeug anzubringenden, die
Gepäckauflagefläche enthaltenden Rahmen aufweisen, der
in Gestalt eines Draht- oder Rohrrahmens ausgebildet
ist, ist es bekannt (DE-GM 7241 747), an dem hinteren
Ende des Rahmens einen im Querschnitt etwa winkelförmigen Halter für einen Rückstrahler vorzusehen.
Dabei ist ein Schenkel des Halters, der sich über die
Querstreben des Rahmens erstreckt, an den Querstreben
mit Hilfe von Laschen und Schrauben befestigt. Diese
Art der Befestigung ist umständlich und läßt an den
Querstreben Erhebungen entstehen, die für die Gepäckauflage nachteilig sind.

Diesen Nachteilen ist bei einem anderen Gepäckträger
für Zweiradfahrzeuge (DE-GM 7912 107) abgeholfen,
bei dem der die Gepäckauflagefläche enthaltende Rahmen
an seinem hinteren Ende aus einem U-förmigen Bügel aus
vergießbarem Werkstoff, beispielsweise Kunststoff oder
Leichtmetall, besteht. Hier ist an dem hinteren Bügel
des Gepäckträgerrahmens als Halter für den Rückstrahler
eine nach unten weisende Platte unlösbar befestigt, die
gegebenenfalls mit dem Bügel aus einem Stück geformt ist.

Diese Art der Befestigung des Rückstrahlers ist aber auf Gepäckträger beschränkt, an deren Rahmen eine Befestigungsplatte angeordnet ist. An schon vorhandenen Gepäckträgern ohne Befestigungsplatte kann ein Rückstrahler in dieser Weise nicht befestigt werden.

Aufgabe der Erfindung ist es deshalb, einen Gepäckträger für Zweiradfahrzeuge zu schaffen, der eine einfache, formschöne und zweckdienliche Befestigungsmöglichkeit für einen Rückstrahler aufweist, welche keine besondere Gestaltung des Gepäckträgers oder dessen Rahmen voraussetzt, so daß erforderlichenfalls auch ein schon vorhandener Gepäckträger üblicher Bauart nachträglich mit dem Rückstrahler ausgerüstet werden kann.

Zur Lösung dieser Aufgabe ist der eingangs genannte Gepäckträger erfindungsgemäß dadurch gekennzeichnet, daß der Halter zwei im Bereiche der Biegung an der Übergangsstelle zwischen den Längsstreben und den Schenkeln auf der Rahmeninnenseite liegende, flache Halterungsteile aufweist, von denen jedes wenigstens ein mit der zugeordneten Längsstrebe und/oder den zugeordneten Schenkel lösbar verrastetes elastisches Klemmbackenpaar trägt und die beide jeweils mit einer quer zu den Längsstreben zur Rahmeninnenseite hin verlaufende Befestigungsplatte verbunden sind, welche durch den daran angebrachten plattenartigen Rückstrahler versteift ist.

Der Halter ist mit seinen Klemmbacken einfach auf die Längsstreben und/oder die Schenkel aufgeschnappt, die ihrerseits durch die durch den plattenartigen Rückstrahler versteifte Befestigungsplatte auseinandergespreizt und damit unverlierbar an den Längsstreben bzw. den Schenkeln gehaltert sind. Damit entfällt die Notwendigkeit, an dem Gepäckträger oder dessen Rahmen schon bei der Herstellung irgendwelche Befestigungsteile vorzusehen, während andererseits die Montage des Rückstrahlers mit wenigen einfachen Handgriffen erfolgen kann.

Um die Klemmbacken auf die Längsstreben und/oder die Schenkel aufschnappen zu können, ohne die Längsstreben oder die Schenkel seitlich auseinanderbiegen zu müssen, ist es zweckmäßig, daß die einstückige Befestigungsplatte aus einem biegsamen Kunststoffmaterial besteht, so daß sie unter Verkürzung des Abstandes der Klemmbacken der beiden Halterungsteile zunächst ausgebogen und bei dem Aufschnappen der Befestigungsbacken in den ursprünglichen geraden Zustand zurückgeführt werden kann.

In einer anderen Ausführungsform kann die Anordnung zum gleichen Zwecke derart getroffen sein, daß die Befestigungsplatte aus zwei starren, an die beiden Halterungsteile angeformten Plattenteilen besteht, die durch einen biegsamen Bereich miteinander verbunden sind. Dieser biegsame Bereich kann durch einen angeformten, quer zu der Befestigungsplatte verlaufenden Steg geringerer Wandstärke gebildet sein, doch ergeben sich besonders einfache Herstellungsverhältnisse, wenn der biegsame Bereich durch wenigstens zwei getrennte, endseitig an die Plattenteile angeformte schmale Stege gebildet ist, die in der Längsrichtung der Befestigungsplatte verlaufend angeordnet sind. Um die Verkürzung des Abstandes der Klemmbacken der beiden Halterungsteile bei der Montage noch zu erleichtern, können dabei die beiden Stege in der Ebene der Befestigungsplatte liegend angenähert kreisförmig gekrümmt sein, so daß sie ihrer Formänderung einen noch kleineren Widerstand entgegensetzen.

Die Klemmbacken sind mit Vorteil der Biegung der Längsstreben bzw. der Schenkel folgend gekrümmt, wodurch abhängig von der jeweiligen Form der Krümmung bereits eine Fixierung in Längsrichtung der Längsstreben bzw. der Schenkel erfolgt. Zusätzlich können die beiden Halterungsteile aber noch jeweils einenends den letzten Querstab des Rahmens übergreifend ausgebildet sein, wozu die Halterungsteile einenends jeweils eine den letzten Querstab des Rahmens übergreifende Nut aufweisen können. Gemeinsam mit der erwähnten Anordnung der Klemmbacken ergibt sich damit ohne zusätzliche Klemmteile eine unverrückbare Fixierung des Halters an dem Gepäckträger.

Von Vorteil ist es auch, wenn die Halterungsteile eine im wesentlichen dreieckförmige Gestalt mit einer die Gepäckauflagefläche des Rahmens verlängernden ebenen Oberseite aufweisen, mit der die Befestigungsplatte einen angenähert rechten Winkel einschließt. Die auf der Innenseite der Längsstreben liegenden flachen, plattenartigen Halterungsteile vergrößern damit die Gepäckauflagefläche, ohne die übliche Befestigung des Spanngurtes an dem Gepäckträger zu beeinträchtigen. Auch Federklappen-Gepäckträger können in der erläuterten Weise ausgebildet werden, weil die flachen Halterungsteile bequem neben den Lagerungsösen der Federklappe liegen.

Schließlich ist es zweckmäßig, wenn die Klemmbacken an dem der Befestigungsplatte benachbarten Ende der Halterungsteile angeordnet sind und sich lediglich über einen Teil der Biegung erstrecken, so daß Toleranzabweichungen in der Biegung unerheblich sind und andererseits der Halter auch auf unterschiedliche Gepäckträgerkonstruktionen aufgeschnappt werden kann.

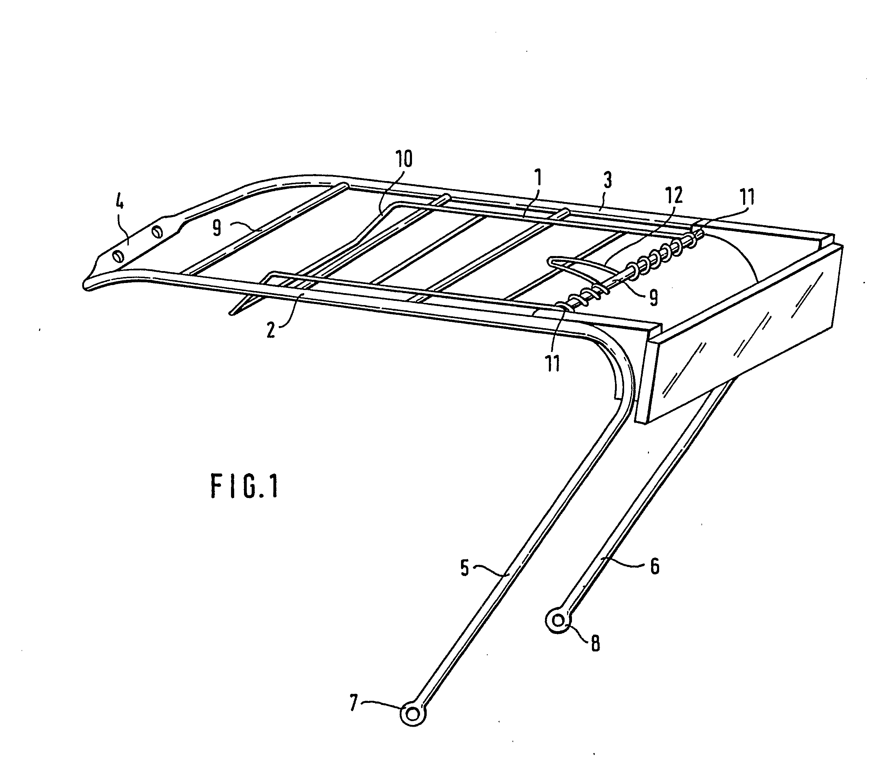

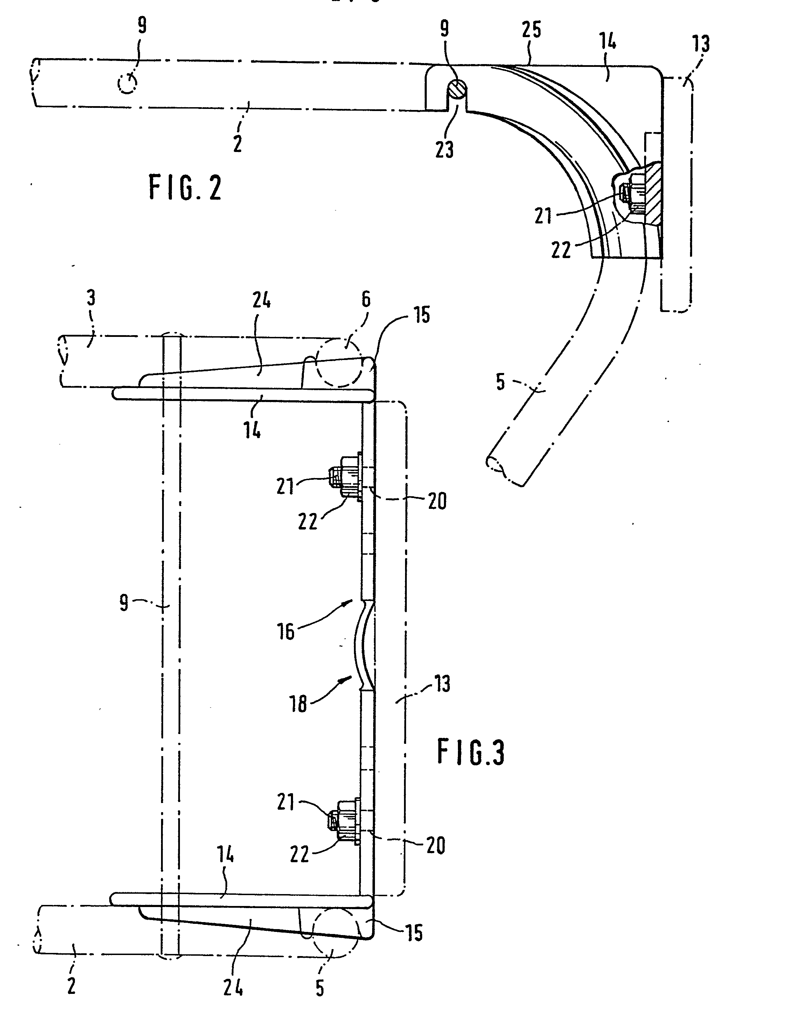

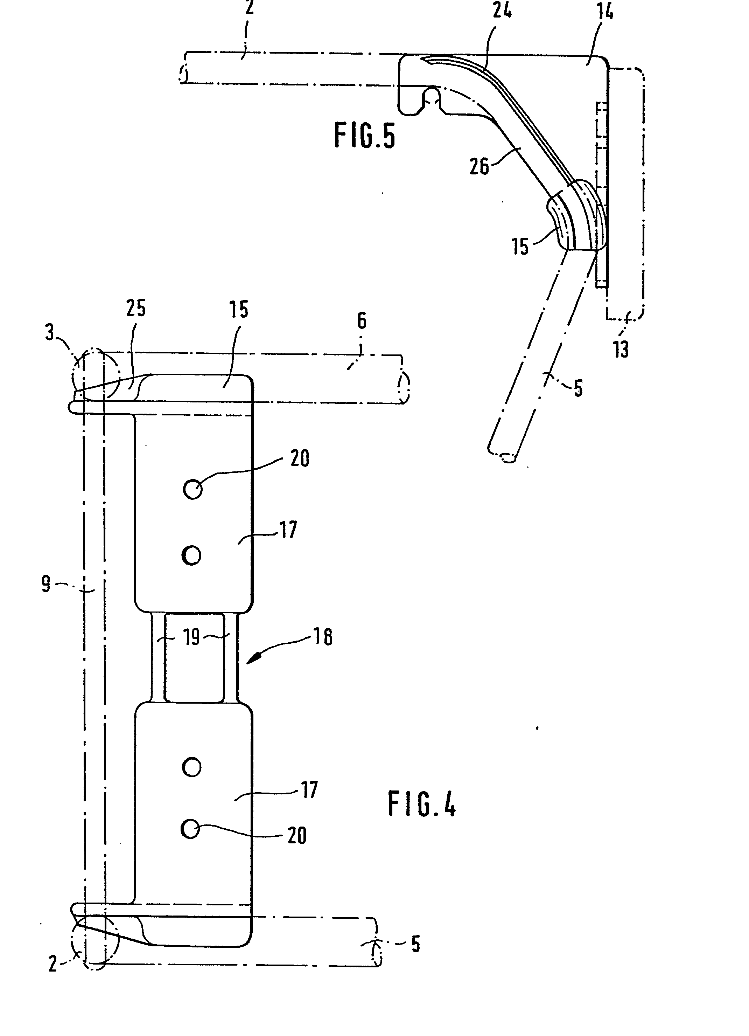

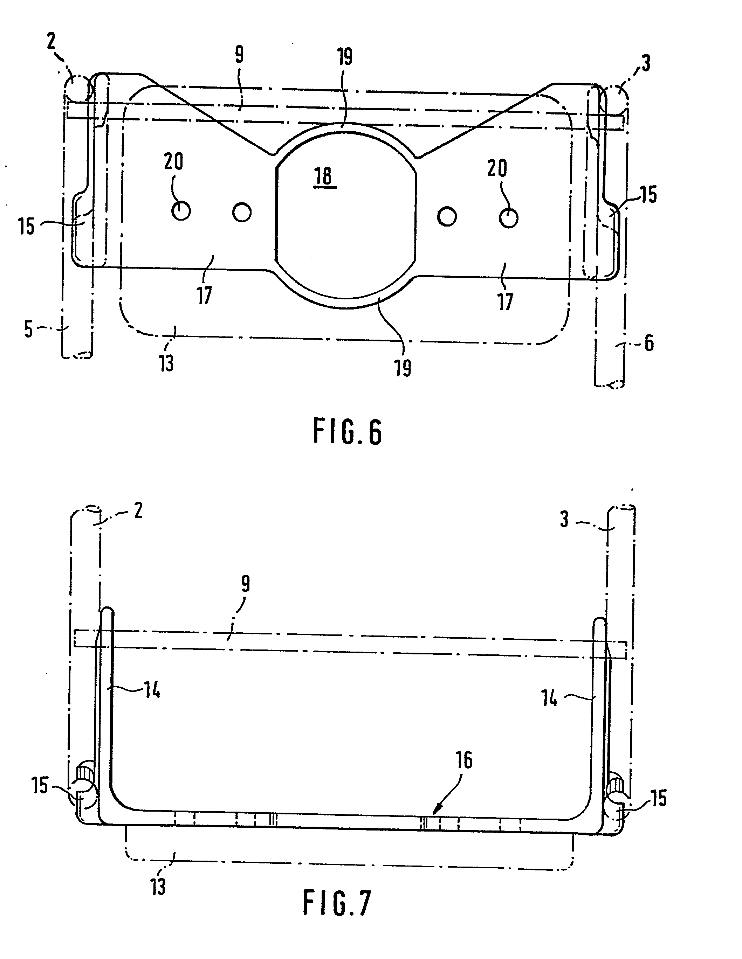

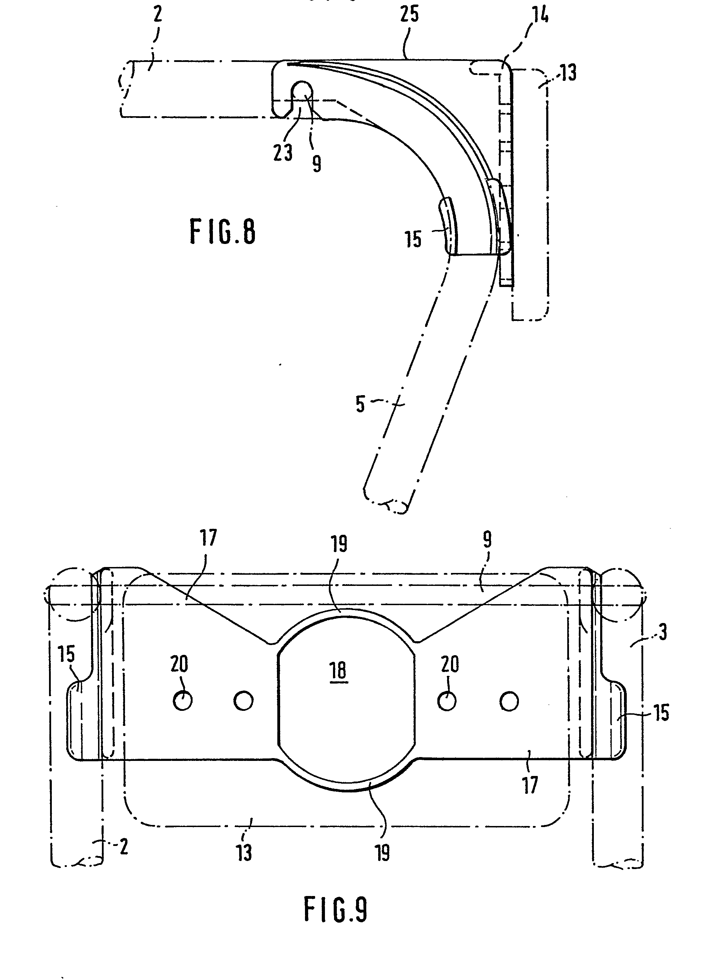

In der Zeichnung sind Ausführungsbeispiele des Gegenstandes der Erfindung dargestellt. Es zeigen Figur 1 einen Gepäckträger gemäß der Erfindung, in perspektivischer Darstellung, Figur 2 den Gepäckträger nach Figur 1, in einer Seitenansicht, im Ausschnitt und in einem anderen Maßstab, Figur 3 den Gepäckträger nach Figur 2, in einer Draufsicht und im Ausschnitt, Figur 4 den Gepäckträger nach Figur 3, in einer Ansicht von hinten, bei abgenommenem Rückstrahler, Figur 5 einen Gepäckträger gemäß der Erfindung, in einer zweiten Ausführungsform, im Ausschnitt, in einer Seitenansicht, entsprechend Figur 2, Figur 6 den Gepäckträger nach Figur 5, in einer Ansicht von hinten, im Ausschnitt, bei abgenommenem Rückstrahler, Figur 7 den Gepäckträger nach Figur 6, in der Draufsicht, Figur 8 einen Gepäckträger gemäß der Erfindung, in einer weiteren Ausführungsform, in einer Seitenansicht, entsprechend Figur 5, im Ausschnitt, und Figur 9 den Gepäckträger nach Figur 8, in einer Ansicht von hinten, bei abgenommenem Rückstrahler, sowie im Ausschnitt.

Der in Fig. 1 dargestellte Hinterrad-Gepäckträger für Zweiradfahrzeuge besteht aus einem aus Metalldraht oder -rohr hergestellten Rahmen 1, der die Gepäckauflage bildet und zwei parallele Längsstreben 2,3 aufweist, die auf der einen Seite durch eine zur Befestigung an der Hinterradgabel des Zweiradfahrzeuges eingerichtete Platte 4 miteinander verbunden und auf der anderen Seite zu Schenkeln 5,6 verlängert sind, welche nach unten zu abgebogen und an ihren freien Enden mit Befestigungsflanschen 7,8 ausgerüstet sind, mittels derer sie an dem Zweiradfahrzeugrahmen angeschraubt werden können. Die Längsstreben 2,3 sind durch Querstreben 9 miteinander verbunden, von denen an der letzten Querstrebe 9 eine Federklappe 10 mittels Lagerösen 11 schwenkbar gelagert ist. Die der Federklappe 10 zugeordnete Feder ist bei 12 veranschaulicht.

An dem hinteren Ende des Rahmens 1 ist ein Halter für einen plattenartigen Rückstrahler 13 angeordnet. Dieser Halter weist zwei im Bereiche der an der Übergangsstelle zwischen den Längsstreben 2,3 und den Schenkeln 5,6 liegende flache, plattenartige Halterungsteile 14 auf, von denen jedes ein mit dem zugeordneten Schenkel 5 bzw. 6 jeweils lösbar verrastetes elastisches Klemmbackenpaar 15 trägt, das in der beispielsweise aus Fig.3 ersichtlichen Weise derart auf die Schenkel 5,6 aufgeschnappt ist, daß die flachen Halterungsteile 14 auf der Rahmeninnenseite an den Längsstreben 2,3 und den Schenkeln 5,6 satt anliegen. Zwischen den Halterungsteilen 14 erstreckt sich eine quer zu den Längsstreben 2,3 verlaufende Befestigungsplatte 16, die bei dem Ausführungsbeispiel nach den Fig. 2 bis 4 aus zwei verhältnismäßig starren, unmittelbar an die Halterungsteile 14 angeformten und rechtwinkling von diesen abgehenden Plattenteilen 17 besteht, welche durch eine biegsame Zone 18 miteinander verbunden sind. Die biegsame Zone 18 besteht aus zwei im Abstand voneinander angeordneten und endseitig an die Plattenteile 17 angeformten parallel verlaufenden geraden Stegen 19. Außerdem sind die Plattenteile 17 mit Befestigungsbohrungen 20 versehen, durch die an dem plattenartigen Rückstrahler angeordnete Befestigungsschrauben 21 durchgesteckt sind, die sodann mittels Muttern 22 festgezogen sind.

Der insoweit beschriebene Halter besteht aus einem
eine gewisse Biegeelastizität aufweisenden Kunststoffmaterial, aus dem er einstückig geformt ist.
Bei der Montage werden bei abgenommenen Rückstrahler
13 die beiden Stege 19, bezogen auf Fig. 4, aus der
Zeichenebene herausgebogen, so daß der gegenseitige
Abstand zwischen den beiden Klemmbacken 15 soweit
verringert wird, daß die Halterungsteile 14 zwischen
die Längsstreben 2,3 eingeführt werden können. Dabei werden die Halterungsteile 14 mit an ihrem einen
Ende jeweils vorgesehenen randoffenen Nuten 23 in
den letzten Querstab 9 eingehängt, worauf die Klemmbacken 15 unter gleichzeitiger Überführung der Stege
19 in dem aus Fig. 3 ersichtlichen, im wesentlichen
gestreckten Zustand auf die Schenkel 5,6 aufgeklemmt
werden. Dabei kommen an den Halterungsteilen 14 angeformte Stützleisten oder -mulden 24 an den Längsstreben 2,3 zur Anlage. Der anschließend von außen
her aufgeschraubte Rückstrahler 13 versteift die
Befestigungsplatte 16, indem er deren biegsamen Bereich 18 unwirksam macht.

Ersichtlich weisen die Halterungsteile 14 (Fig. 2)
eine im wesentlichen dreiecksförmige Gestalt auf;
die Klemmbacken 15 erstrecken sich der Krümmung
in dem Übergangsbereich zwischen den Längsstreben
2,3 und den Schenkeln 5,6 folgend jedoch lediglich
über einen Teil der Krümmung und sind an dem dem
Rückstrahler 13 benachbarten Ende der Befestigungsplatte 16 angeordnet. Rechtwinklig zu der Befestigungsplatte verläuft die in Fig. 2 mit 25 bezeichnete Oberseite der Halterungsteile 14, die - wie
aus dieser Fig. zu ersehen - die Gepäckauflagefläche des Rahmens 1 nach hinten zu verlängert.

- 8 -

Bei den Ausführungsformen nach den Fig. 5 bis 9 bezeichnen gleiche Bezugszeichen gleiche Teile, so daß sich insoweit eine nochmalige Erörterung erübrigt.

In Fig. 5 ist in dem Übergangsbereich zwischen den Längsstreben 2,3 und den Schenkeln 5,6 keine stetige kreisförmige Krümmung vorhanden; die Anordnung ist vielmehr derart getroffen, daß zwischen zwei Krümmungen bei 26 jeweils ein geradliniger Schenkelteil vorhanden ist. Wie aus der Fig. zu ersehen, ist aber das Klemmbackenpaar 15 im Bereiche einer Biegung der Schenkel 5,6 angeordnet.

Außerdem sind die beiden Stege 19 in der Ebene der Befestigungsplatte 16 liegend nach oben und nach unten jeweils im wesentlichen kreisbogenförmig gekrümmt, um damit die bei der Montage erforderliche, bereits erläuterte Verformung im Bereiche der durch die Stege 19 gebildeten biegsamen Zone zu erleichtern.

Die Ausführungsform nach den Fig. 8,9 schließlich entspricht im wesentlichen jener nach den Fig. 2 bis 4, mit dem Unterschied jedoch, daß auch hier die Stege 19 kreisbogenförmig nach außen zu gekrümmt sind.

Anstelle der Stege 19 könnte die biegsame Zone auch durch einen quer zu der Längserstreckung der Befestigungsplatte 16 verlaufenden angeformten Steg verringerter Wandstärke gebildet sein, wie es auch denkbar wäre, auf eine eigene biegsame Zone 18 überhaupt zu verzichten und die ganze Befestigungsplatte 16 über ihre Länge so
biegsam auszubilden, daß sie entsprechend den
Stegen 19 der Ausführungsform nach den Fig. 2
bis 4 bei der Montage seitlich ausgewölbt werden
kann.

Patentansprüche:

1. Gepäckträger für Zweiradfahrzeuge, mit einem die Gepäckauflagefläche enthaltenden, aus Längs- und Querstreben bestehenden Rahmen, dessen Längsstreben einenends zu zwei nach unten gebogenen Schenkeln verlängert sind, welche endseitig Einrichtungen zur Befestigung an dem Zweiradfahrzeugrahmen tragen, wobei an dem hinteren Ende des Rahmens ein plattenartiger Halter für einen von außen anbringbaren Rückstrahler angeordnet ist, dadurch gekennzeichnet, daß der Halter (2) im Bereiche der Biegung an der Übergangsstelle zwischen den Längsstreben (2,3) und den Schenkeln (5,6) auf der Rahmeninnenseite liegende flache Halterungsteile (14) aufweist, von denen jedes wenigstens ein mit der zugeordneten Längsstrebe (2,3) und/oder dem zugeordneten Schenkel (5,6) lösbar verrastetes, elastisches Klemmbackenpaar (15) trägt und die beide jeweils mit einer quer zu den Längsstreben (2,3) zur Rahmeninnenseite hin verlaufenden Befestigungsplatte (16) verbunden sind, welche durch den daran angebrachten plattenartigen Rückstrahler (13) versteift ist.

2. Gepäckträger nach Anspruch 1, dadurch gekennzeichnet, daß die einstückige Befestigungsplatte (16) aus einem biegsamen Kunststoffmaterial besteht.

3. Gepäckträger nach Anspruch 1, dadurch gekennzeichnet, daß die Befestigungsplatte (16) aus zwei starren, an die beiden Halterungsteile (14) angeformten Plattenteilen (17) besteht, die durch einen biegsamen Bereich (18) miteinander verbunden sind.

4. Gepäckträger nach Anspruch 3, dadurch gekennzeichnet, daß der biegsame Bereich (18) durch einen angeformten, quer zu der Befestigungsplatte (16) verlaufenden Steg geringerer Wandstärke gebildet ist.

5. Gepäckträger nach Anspruch 3, dadurch gekennzeichnet, daß der biegsame Bereich (18) durch wenigstens zwei getrennte, endseitig an die Plattenteile (17) angeformte schmale Stege (19) gebildet ist, die in der Längsrichtung der Befestigungsplatte (16) verlaufend angeordnet sind.

6. Gepäckträger nach Anspruch 5, dadurch gekennzeichnet, daß die beiden Stege (19) in der Ebene der Befestigungsplatte (16) liegend angenähert kreisförmig gekrümmt sind.

7. Gepäckträger nach einem der vorhergehenden Ansprüche, dadurch gekennzeichnet, daß die Klemmbacken (15) der Biegung folgend gekrümmt sind.

8. Gepäckträger nach einem der vorhergehenden Ansprüche, dadurch gekennzeichnet, daß die beiden Halterungsteile (14) jeweils einenends den letzten Querstab (9) des Rahmens (1) übergreifend ausgebildet sind.

9. Gepäckträger nach Anspruch 8, dadurch gekennzeichnet, daß die Halterungsteile (14) einenends jeweils eine den letzten Querstab (9) des Rahmens (1) übergreifende Nut (23) aufweisen.

10. Gepäckträger nach einem der Ansprüche 8 oder 9, dadurch gekennzeichnet, daß die Halterungsteile (14) eine im wesentlichen dreieckförmige Gestalt mit einer die Gepäckauflagefläche des Rahmens (1) verlängernden, ebenen Oberseite (25) aufweisen, mit der die Befestigungsplatte (16) einen angenähert rechten Winkel einschließt.

11. Gepäckträger nach Anspruch 10, dadurch gekennzeichnet, daß die Klemmbacken (15) an dem der Befestigungsplatte (16) benachbarten Ende der Halterungsteile (14) angeordnet sind und sich lediglich über einen Teil der Biegung erstrecken.

12. Gepäckträger nach einem der vorhergehenden Ansprüche, dadurch gekennzeichnet, daß die Halterungsteile (14) anschließend an die Klemmbacken (15) jeweils eine die zugeordnete Längsstrebe (2,3) und/oder den zugeordneten Schenkel (5,6) teilweise übergreifende Stützleiste (24) oder -mulde aufweisen.

FIG.1

0060988

FIG.2

FIG.3

0060988

FIG.5

FIG.4

0060988

**FIG.6**

**FIG.7**

0060988

FIG.8

FIG.9

Europäisches
Patentamt

# EUROPÄISCHER RECHERCHENBERICHT

EP   82 10 0944

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | DE-A-3 031 065 (AUTERO,MARKKU,HANKO) *Insgesamt* | 1 | B 62 J    7/04 B 62 J    5/20 |
| A | FR-A-2 338 176   (PLETSCHER) --- | | |
| D,A | EP-A-0 018 513   (ESGE-MARBY) & DE - U - 7 912 107 ----- | | |

| RECHERCHIERTE SACHGEBIETE (Int. Cl. ³) |
|---|
| B 62 J |

Der vorliegende Recherchenbericht wurde für alle Patentansprüche erstellt.

| Recherchenort | Abschlußdatum der Recherche | Prüfer |
|---|---|---|
| DEN HAAG | 16-06-1982 | NADELHOFFER J. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82